# EUROPÄISCHE PATENTSCHRIFT

(11) **EP 2 756 583 B1**
(45) Veröffentlichungstag und Bekanntmachung des Hinweises auf die Patenterteilung: **30.10.2019**
(21) Anmeldenummer: 12761892.4
(22) Anmeldetag: 24.08.2012
(51) Int. Cl.: H02K 5/22

(54) **ELEKTROMOTOR, INSBESONDERE KÜHLERLÜFTERMOTOR**
ELECTRIC MOTOR, IN PARTICULAR A RADIATOR FAN MOTOR
MOTEUR ÉLECTRIQUE, NOTAMMENT MOTEUR DE VENTILATEUR DE RADIATEUR

(30) Priorität: 12.09.2011 DE 102011112821
(43) Veröffentlichungstag der Anmeldung: 23.07.2014
(73) Patentinhaber: Brose Fahrzeugteile GmbH & Co. Kommanditgesellschaft, Würzburg, 97076 Würzburg (DE)
(72) Erfinder: WINHEIM, Georg, 97737 Gemünden am Main (DE); ZIEGLER, Thomas, 97450 Schwebenried (DE); ZICK, Stefan, 97332 Volkach (DE); GWOZDZ, Jan, 97076 Würzburg (DE); RÜMMLER, Maik, 96148 Baunach (DE)
(74) Vertreter: FDST Patentanwälte
(86) Internationale Anmeldenummer: PCT/EP2012/003576
(87) Internationale Veröffentlichungsnummer: WO 2013/037452

(56) Entgegenhaltungen:
- EP-A1- 0 688 088
- EP-A1- 0 688 088
- EP-A1- 1 079 502
- EP-A1- 1 079 502
- EP-A2- 1 289 341
- EP-A2- 1 289 341
- WO-A1-02/087057
- WO-A1-02/087057
- DE-A1- 10 159 760
- DE-A1- 10 159 760
- DE-A1- 19 736 119
- DE-A1- 19 736 119
- DE-C1- 3 214 896
- DE-C1- 3 214 896
- FR-A1- 2 750 542
- FR-A1- 2 750 542
- FR-A3- 2 818 489
- FR-A3- 2 818 489
- JP-A- S6 464 285
- JP-A- S6 464 285
- JP-A- H02 302 087
- JP-A- H02 302 087

## Beschreibung

Die Erfindung betrifft einen Elektromotor gemäß dem Oberbegriff des Anspruchs 1. Ein derartiger Elektromotor ist aus der WO 02/087057 A1 bekannt. Unter Elektromotor wird hierbei insbesondere einen bürstenlosen Elektromotor mit Innenrotor, vorzugsweise einen Kühlerlüftermotor eines Kraftfahrzeugs verstanden.

Ein derartiger Elektromotor umfasst üblicherweise einen gegenüber einem feststehenden Stator oder Ständer drehbar gelagerten Rotor bzw. Läufer. Bei einem bürstenlosen Elektromotor ist der Stator häufig mit einer Drehfeldwicklung bestückt, mit der durch deren Beaufschlagung mit einem Wechselstrom ein magnetisches Drehfeld erzeugt wird. Der innerhalb des im Wesentlichen hohlzylindrischen Stators angeordnete Rotor ist in der Regel mit Permanentmagneten bestückt, die ein mit dem Drehfeld des Stators wechselwirkendes Rotormagnetfeld erzeugen.

Bei einem bürstenlosen Elektromotor wird der zur Speisung der Stator- bzw. Drehfeldwicklung vorgesehene Wechselstrom üblicherweise durch einen Umrichter (Wechselrichter) erzeugt. Der diesbezüglich übliche Wechselrichter richtet eine Gleichspannung, insbesondere die Bordnetzspannung des Kraftfahrzeugs, in eine Wechselspannung zur Speisung der Drehfeldwicklung um. Bei kleineren Elektromotoren ist dieser Umrichter zusammen mit einer zugeordneten Steuerelektronik häufig in ein Elektronikfach aufgenommen, das in das Motorgehäuse integriert ist.

Die Steuerelektronik umfasst üblicherweise eine Entstördrossel (EMV-Schutz), ggf. einen Entstörkondensator sowie einen gleichstromseitigen Energiespeicher in Form eines oder mehrerer Speicher- oder Ladekondensatoren (Elektrolytkondensatoren). Die Entstördrossel und der oder jeder Ladekondensator sowie weitere, insbesondere aktive Bauelemente in Form von Leistungshalbleitern, die in einer Brückenschaltung verschaltet und mit der Drehfeldwicklung verbunden sind, sind in der Regel auf einer Leiterplatte montiert und dort untereinander schaltungstechnisch verbunden. Die Kontaktierung der Bauelemente erfolgt mittels Lötverbindungen oder gemäß der eingangs genannten WO 02/087057 A1 mittels Klemm- oder Schneidklemmkontakten.

Der Erfindung liegt daher die Aufgabe zugrunde, einen Elektromotor der genannten Art anzugeben, dessen Elektronik, insbesondere deren Bauelemente oder Anschlusskomponenten, mit möglichst geringem Aufwand zuverlässig kontaktiert werden kann bzw. können.

Diese Aufgabe wird erfindungsgemäß gelöst durch die Merkmale des Anspruchs 1. Vorteilhafte Varianten, Ausgestaltungen und Weiterbildungen sind Gegenstand der Unteransprüche.

Hierzu umfasst der Elektromotor, der insbesondere als Kühlerlüftermotor eines Kraftfahrzeugs eingesetzt ist, einen mit einer Drehfeldwicklung bewickelten Stator und einen gegenüber diesem drehbar gelagerten Rotor sowie eine Umrichterelektronik zum Umrichten einer Gleichspannung, insbesondere der Bordnetzspannung des Kraftfahrzeugs, in eine Wechselspannung zur Speisung der Drehfeldwicklung. Diese ist insbesondere in Form mehrerer Spulen oder Spulenwicklungen hergestellt, die vorzugsweise miteinander zu einer Dreiecksschaltung verbunden bzw. verschaltet sind. Der Rotor ist vorzugsweise permanenterregt und hierzu mit Magneten bestückt.

Auf eine Leiterplatte der Umrichterelektronik sind eine Anzahl von Kontaktelementen für isolationsfreie Anschlusskontakte mindestens eines Bauelementes der Umrichterelektronik, insbesondere des oder jedes Ladekondensators, sowie für lackisolierte Kontaktelementen bzw. Anschlusskontakte, insbesondere für Wicklungsenden der Drehfeldwicklung und/oder für Kontakt- oder Spulenenden der Entstördrossel, montiert. Die Kontaktelemente sind als Klemmkontakte, insbesondere für den oder jeden Ladekondensatoren, oder als Schneidklemmkontakte für die lackisolierte Wicklungs- bzw. Kontaktenden ausgebildet.

Die Kontaktierung der Ladekondensatoren erfolgt vermittels eines Stromschienenpaares bzw. einer oder zwei Strom- oder Starkstromschienen. Das Stromschienenpaar weist eine der Anzahl der Anschlusskontakte entsprechenden Anzahl von Klemmkontakten auf. Für die Montage und/oder Halterung des Stromschienenpaares auf der Leiterplatte weist diese eine Anzahl von Steckschlitzen bzw. Stecklöchern auf, in denen das Stromschienenpaar mit korrespondierenden Steckstellen einsitzt. Dabei ist geeigneterweise mindestens eine mit einem der Stecklöcher korrespondierende Steckstelle mindestens einer Stromschiene des Stromschienenpaares als Einpressstift ausgebildet. Die Ausbildung des oder jedes Einpressstiftes als keilförmige oder pfeilspitzenartige Ankerstell ermöglicht eine zuverlässige Befestigung der oder jeder Stromschiene auf der Leiterplatte in den korrespondierenden Stecköffnungen oder -löchern.

Für eine raumsparende Anordnung und zuverlässige Kontaktierung insbesondere mehrerer, prallel zu schaltender Lade- oder Speicherkondensatoren sind in eine der beiden, vorzugsweise zueinander parallelen Stromschienen des Stromschienenpaares eine der Anzahl der Speicherkondensatoren entsprechende Anzahl von Ausnehmungen eingebracht. Über diese ist der jeweilige, mit der anderen Stromschiene klemmkontaktierte Anschlusskontakt des entsprechenden Ladekondensators berührungslos und somit kontaktfrei geführt.

Zur Unterdrückung von Kriechströmen und zur Vermeidung temperaturbedingter Kristallisationserscheinungen sind in die Leiterplatte zwischen den Steckschlitzen bzw. Stecklöchern, die den beiden Stromschienen des Stromschienenpaares zugeordnet sind, eine Anzahl von Ausnehmungen eingebracht. Diese sind vorzugsweise schlitzartig gestaltet und verlaufen zu den Stromschienen parallel.

In einer an sich aus der DE 197 36 119 A1 bekannten Ausgestaltung des oder jedes Schneidklemmkontaktes weist dieser zwischen dessen beiden Schneidklemmschenkeln einen sich in Schneidklemmrichtung von einer Einsteckmündung zum Kontaktboden hin erstreckenden Schneidklemmspalt mit einer sich an die Einsteckmündung anschließenden Vorschneidezone auf. Diese ist geeigneterweise scharfkantig und bewirkt ein zuverlässiges Einschneiden des jeweiligen Schneidschenkels des Schneidklemmkontaktes in die Lackisolation der lackisolierten Anschlusskontakt der Entstördrossel bzw. der Wicklungsenden der Drehfeldwicklung.

Gemäß einer zweckmäßigen Weiterbildung dieser Ausgestaltung des Schneidklemmkontaktes schließt sich an die Vorschneidezone des Schneidklemmspalts in Schneidklemmrichtung eine Abreibzone für die Lackisolation des Anschlusskontaktes an. Die Abreibzone ist entlang des Schneidklemmspaltes in Schneidklemmrichtung vorzugsweise schräg verlaufend, d. h. zum Kontakt- oder Klemmboden des Schneidklemmspaltes hin keilförmig oder V-förmig ausgebildet.

Zur Bewirkung eines in Schneidklemmrichtung langsam zunehmenden Klemmkraftanstiegs umfasst der Schneidklemmspalt eine Klemmzone, die besonders bevorzugt abgerundet ausgeführt ist, d. h. einen Radius aufweist. Zweckmäßigerweise schließt sich die Klemmzone an die Abreibzone an. Die entsprechend gestaltete Abreibzone bewirkt einen langsam zunehmenden Klemmkraftanstieg innerhalb des Schneidklemmspaltes. Hierdurch werden die (maximalen) Einpresskräfte reduziert, was wiederum eine Schonung der Befestigungsstelle (Lötstelle) des Schneidklemmkontaktes auf einer Leiterplatte oder dergleichen zur Folge hat. Der Schneidklemmkontakt ist besonders für lackisolierte Massivdrähte geeignet.

Nachfolgend wird ein Ausführungsbeispiel der Erfindung anhand einer Zeichnung näher erläutert. Darin zeigen:
- Fig. 1: in einer Explosionsdarstellung einen Kühlerlüfter für ein Kraftfahrzeug mit einem eigen gekühlten, bürstenlosen Innenrotormotor mit integrierter Umrichterelektronik,
- Fig. 2: in perspektivischer Darstellung mit Blick auf eine Anschlussseite den Motor gemäß Fig. 1,
- Fig. 3: in Draufsicht den Motor gemäß Fig. 1 bei abgenommenem Elektronikfachdeckel (Gehäusedeckel),
- Fig. 4: in perspektivischer Darstellung den mit einem Kunststoffmantel umspritzten Stator (Statorblechpaket) mit einer Drehfeldwicklung mit deren durch Dichtelemente geführten Wicklungsenden,
- Fig. 5: ausschnittsweise in perspektivischer Darstellung die Umrichterelektronik mit Blick auf die Schneidklemmkontaktierung der Wicklungsenden der Drehfeldwicklung der statorseitigen Drehfeldwicklung,
- Fig. 6: eine Darstellung gemäß Fig. 5 mit Blick auf eine Entstördrossel mit schneidklemmkontaktierten Spulen- bzw. Kontaktenden,
- Fig. 7: im Ausschnitt eine Draufsicht auf die Umrichterelektronik mit Blick auf mehrere, über Stromschienen kontaktierte Ladekondensatoren,
- Fig. 8: in perspektivischer Darstellung die Klemmkontaktierung der Ladekondensatoren mit den Stromschienen,
- Fig. 9: in Draufsicht die mit Bauelementen bestückte Leiterplatte der Umrichterelektronik mit den klemmkontaktierten Ladekondensatoren,
- Fig. 10: eine Schnittdarstellung entlang der Linie X-X in Fig. 9 mit Blick auf die Ladekondensatoren und deren Anschlusskontakte,
- Fig. 11: eine Darstellung gemäß Fig. 5 mit Blick auf ein Steckschlitz- und Stecklochmuster der Leiterplatte für die Stromschienen,
- Fig. 12a-c: in einer Stirnansicht einen erfindungsgemäßen Schneidklemmkontakt mit einem zu kontaktierenden Anschluss in unterschiedlichen Positionen, und
- Fig. 13: einen Ausschnitt XIII aus Fig. 12c in größerem Maßstab mir einer Darstellung der Schneidklemmgeometrie des Schneidklemmkontaktes.

Einander entsprechende Teile und Größen sind in allen Figuren stets mit gleichen Bezugszeichen versehen.

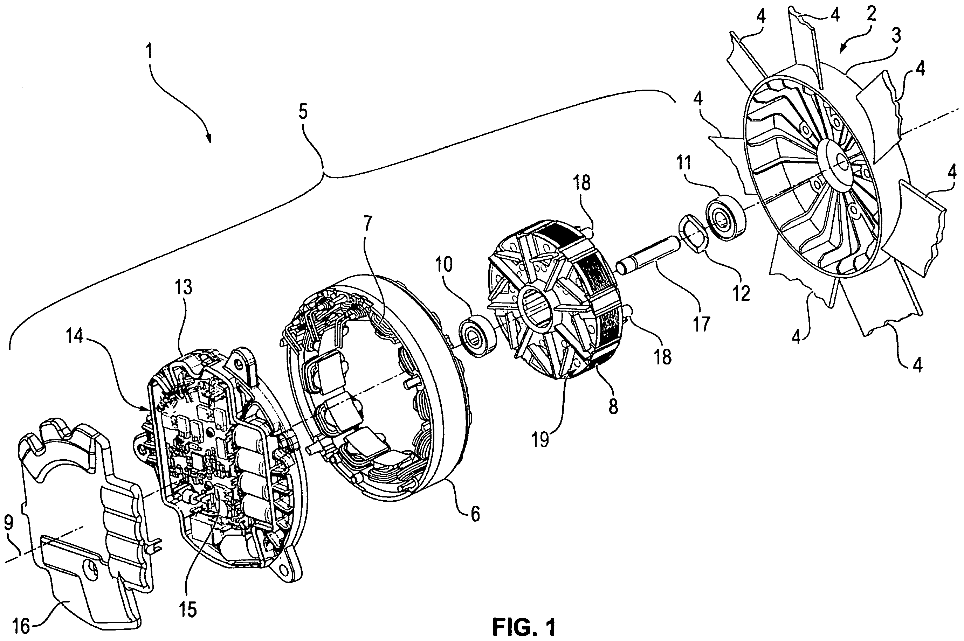

Fig. 1 zeigt in auseinander genommenem Zustand einen Lüfter 1 für den Kühler eines Kraftfahrzeugs. Der Lüfter 1 umfasst ein Lüfterrad 2 mit einer zentralen Kappe 3, um deren Außenumfang (nur ansatzweise dargestellte) Luftleitschaufeln 4 gleichverteilt angeordneten sind. Der Lüfter 1 umfasst des Weiteren einen auch als Lüftermotor bezeichneten Elektromotor 5, mittels welchem das Lüfterrad 2 drehangetrieben ist.

Der Motor 5 wird im Wesentlichen gebildet durch einen Stator 6, der mit einer dreiphasigen Drehfeldwicklung 7 in Form von Spulen bewickelt ist. Der Motor 5 umfasst des Weiteren einen permanent erregten Rotor 8, der im Inneren des Stators 6 um eine Motorachse 9 drehbar gelagert ist. Zur Lagerung des Rotors 8 umfasst der Motor 5 zwei Wälzlager 10 und 11, die von axial entgegengesetzten Seiten am Rotor 8 angreifen. Das Axialspiel des Rotors 8 zwischen den beiden Wälzlagern 10 und 11 ist hierbei durch einen Federring 12 angefedert.

Der Motor 5 umfasst des Weiteren einen etwa scheibenförmigen Motorträger 13. An einer von dem Lüfterrad 2 abgewandten Stirnseite ist in den Motorträger 13 ein Elektronikfach 14 eingebracht, in das eine Umrichterelektronik 15 eingesetzt ist. Zur dichten Verschließung des Elektronikfachs 14 umfasst der Motor 5 einen nachfolgend auch als Gehäusedeckel bezeichneten Elektronikfachdeckel 16.

Der Rotor 8 ist (in nicht näher dargestellter Weise) durch ein Blechpaket gebildet, in das Permanentmagneten zur Erzeugung eines Erregerfeldes eingesetzt sind, wobei das Blechpaket zusammen mit den eingesetzten Permanentmagneten mit einem Kunststoffmantel umspritzt ist. In ähnlicher Weise besteht auch der Stator 6 aus einem Blechpaket, das mit einem Kunststoffmantel umspritzt ist.

Der Motorträger 13 ist insbesondere durch ein einstückiges Druckgussteil aus Aluminium gebildet. Bei dem Elektronikfachdeckel 16 handelt es sich vorzugsweise um ein Spritzgussteil aus Kunststoff.

An seiner Vorderseite ist der Rotor 8 mit vier Schraubdomen 18 versehen, mittels welchen der Rotor 8 im Montagezustand an dem Lüfterrad 2 verschraubt ist. Die Befestigung des Motors 5 und damit des gesamten Lüfters 1 an dem Fahrzeug erfolgt über den Motorträger 13, der hierfür mit drei von seinem Außenumfang abstehenden Schraublaschen 19 versehen ist. Bei dem Motor 5 handelt es sich um einen bürstenlosen eigen gekühlten Innenrotor- bzw. Innenläufermotor.

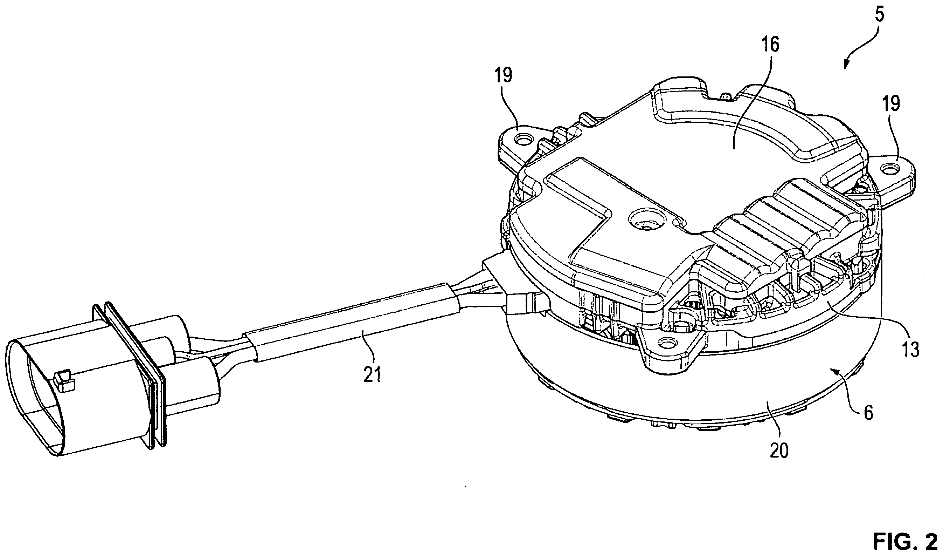

Im in Fig. 2 gezeigten, zusammengebauten Zustand des Motors 5 ist der Stator 6 fest auf einer Vorderseite des Motorträgers 13 aufgebracht. Der Rotor 8 ist in den mit dem Kunststoffmantel 20 umspritzten Stator 6 eingesetzt, wobei der Rotor 8 von beiden Axialseiten her von je einem der beiden Wälzlager 10 und 11 flankiert ist. Die Wälzlager 10 und 11 sind hierbei in nicht näher dargestellter Art und Weise an einem Achsbolzen gelagert, der seinerseits an dem Motorträger 13 befestigt ist.

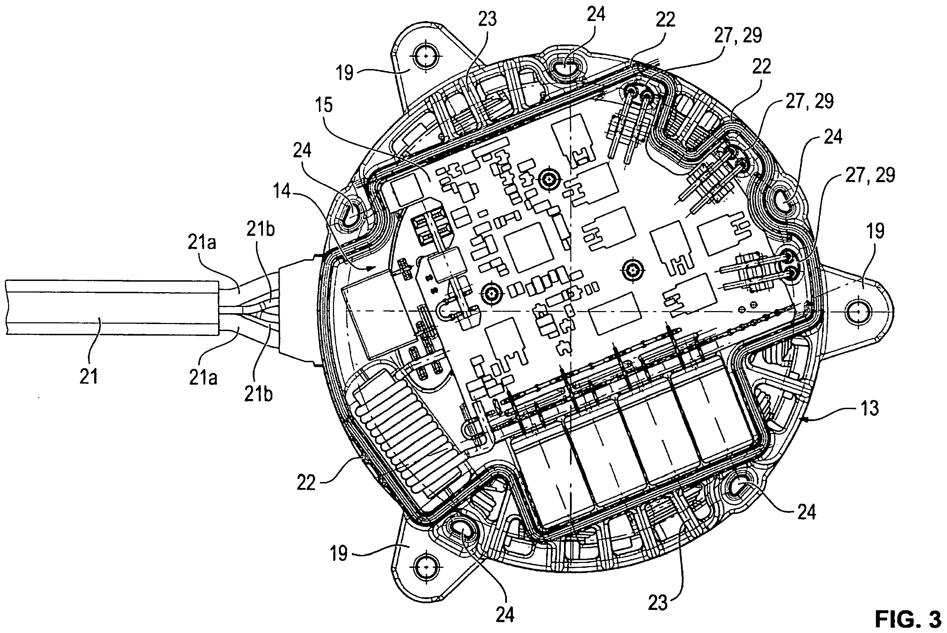

Fig. 3 zeigt den Motor 5 bei abgenommenem Elektronikfachdeckel 16 mit Blick in das Elektronikfach 14 mit darin angeordneter Umrichterelektronik 15. An diese geführt und mit dieser kontaktiert sind Versorgungsleitungen (Plus- und Minus- oder Masse-Pol) sowie Sensor- oder Datenleitungen eines Anschlusskabels 21. Das Elektronikfach 14 ist von einem umlaufenden, geschlossenen Dicht- oder Fügerand 22 umschlossen. Außerhalb des Elektronikfaches 14 weist der Motorträger 13 im Wesentlichen radial verlaufende Klemmrippen 23 für den Elektronikfachdeckel 16 auf. An mehreren, am Umfang des Motorträgers 13 verteilten Positionen befinden sich Fixier- oder Stemmöffnungen 24.

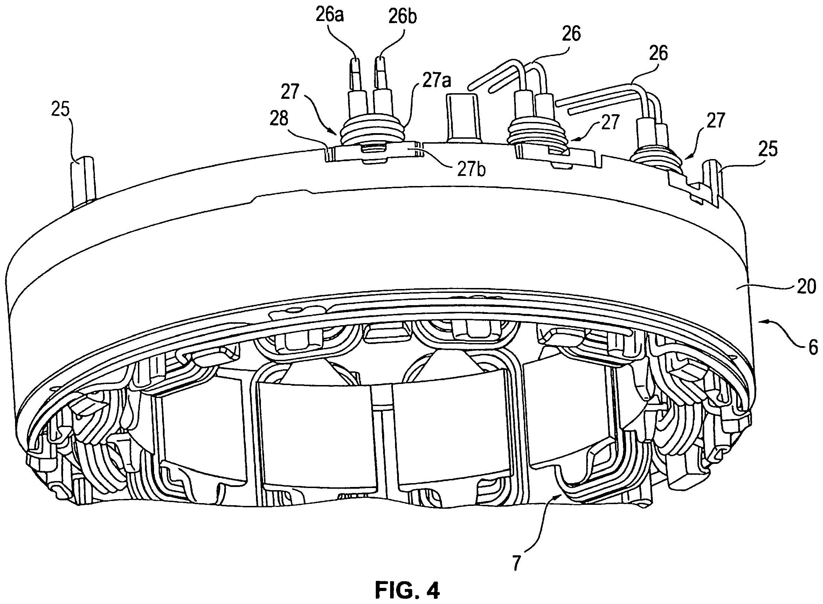

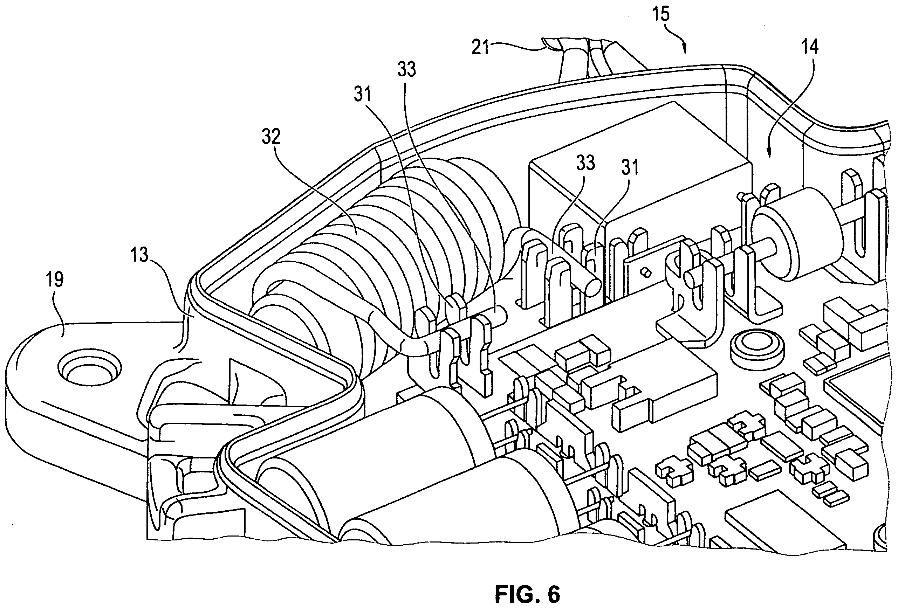

Fig. 4 zeigt den mit dem Kunststoffmantel 20 umspritzten Stator 6 sowie dessen Drehfeldwicklung 7. An den Kunststoffmantel 20 sind Stemmnoppen 25 angeformt, die im Fügezustand des Stators 6 die dessen Stemm- bzw. Fixieröffnungen 24 des Motorträgers 13 durchgreifen (Fig. 6) und anschließend verstemmt, beispielsweise heiß verformt, werden. Erkennbar sind zudem drei Paare 26 von Wicklungsenden 26a, 26b, die über Dichtelemente 27 geführt sind.

Die Dichtelemente 27 sind vorzugsweise aus einem Zweikomponentenkunststoff gefertigt und weisen eine vergleichsweise weiche, vorzugsweise nach Art einer Labyrinthdichtung, ausgebildete Dichtungskomponente 27a und eine vergleichsweise harte Stützkomponente 27b auf. Mit dieser harten Stützkomponente 27b sitzt das jeweilige Dichtelement 27 in einer Aufnahmetasche 28 ein, die in den Kunststoffmantel 20 des Stators 6 eingeformt ist. Mit den weichen Dichtungskomponenten 27a sitzen die Dichtelemente 27 in korrespondierenden Durchtrittsöffnungen 29 des Motorträgers 13 dichtend ein, wobei demzufolge die Wicklungsendenpaare 26 der Drehfeldwicklung 7 in das Elektronikfach 15 geführt sind, wie dies in den Fig. 3, 5, 8 und 11 ersichtlich ist.

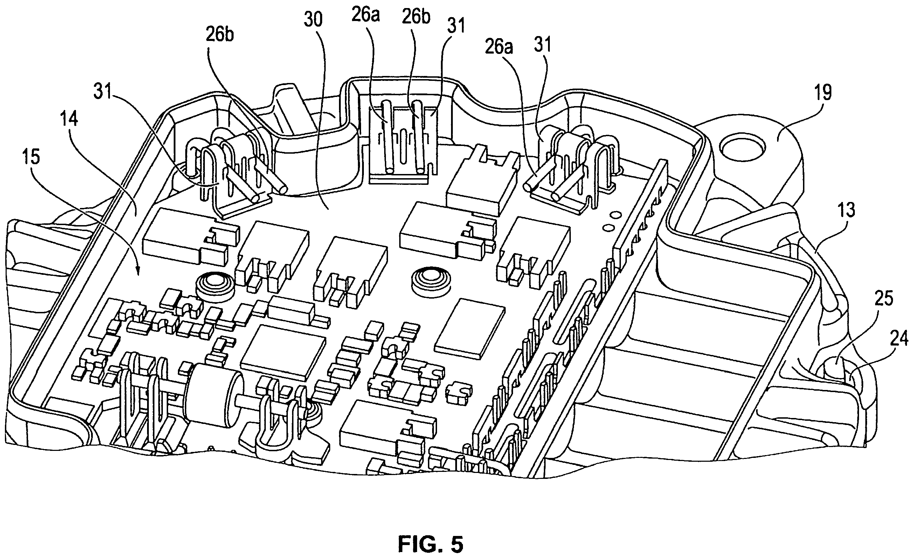

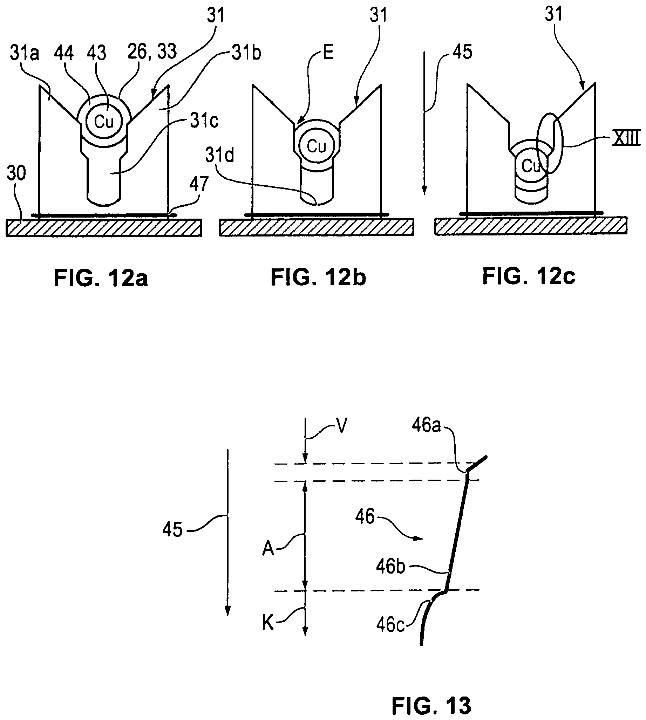

Fig. 5 zeigt die Umrichterelektronik 15 innerhalb des Elektronikfaches 14 mit auf eine Leiterplatte 30 montierten Schneidklemmkontakten 31 zur Kontaktierung der Wicklungsenden 26a, 26b der Drehfeldwicklung 7 bzw. deren Spulen 7a. Die Schneidklemmkontakte 31 sind auf der Leiterplatte 30 beispielsweise aufgelötet oder in sonstiger Art und Weise dort montiert. Die Ausgestaltung der Schneidklemmkontakte 31 wird im Zusammenhang mit den Fig. 12 und 13 näher beschrieben.

Fig. 6 zeigt wiederum die im Elektronikfach 14 des Motorträgers 13 angeordnete Umrichterelektronik 15 mit Blick auf eine Entstördrossel 32. Die nachfolgend auch als Spulenenden bezeichneten Kontaktanschlüsse bzw. enden 33 der Entstördrossel 32 sind ebenfalls in Schneidklemmkontakten 31 kontaktiert, deren Geometrie wiederum anhand der Fig. 12 und 13 näher erläutert wird.

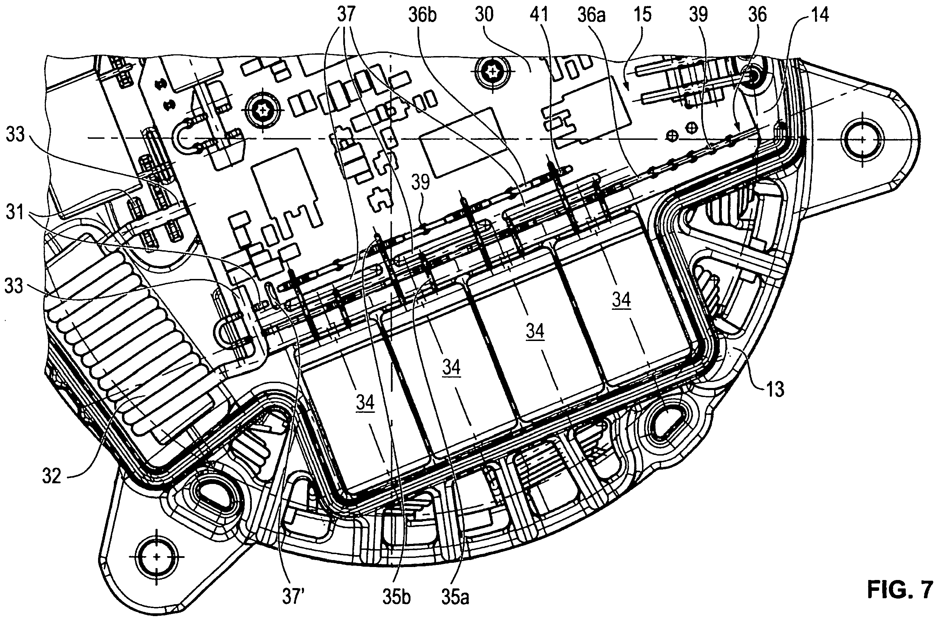

Fig. 7 zeigt ebenfalls die Leiterplatte 30 der Umrichterelektronik 15 sowie innerhalb des Elektronikfaches 14 nebeneinander angeordnete Ladekondensatoren 34 mit Anschlüssen oder Anschlusskontakten 35a, 35b. Diese sind in Stromschienen 36a bzw. 36b klemmkontaktiert. Die zueinander parallel angeordneten Stromschienen 36a und 36b bilden ein Stromschienenpaar 36. Eine der Stromschienen, vorliegend die Stromschiene 36a ist an einem Schienenende U-förmig abgebogen und enthält dort einen der Schneidklemmkontakte 31 für das entsprechende Spulenende 33 der Entstördrossel 32.

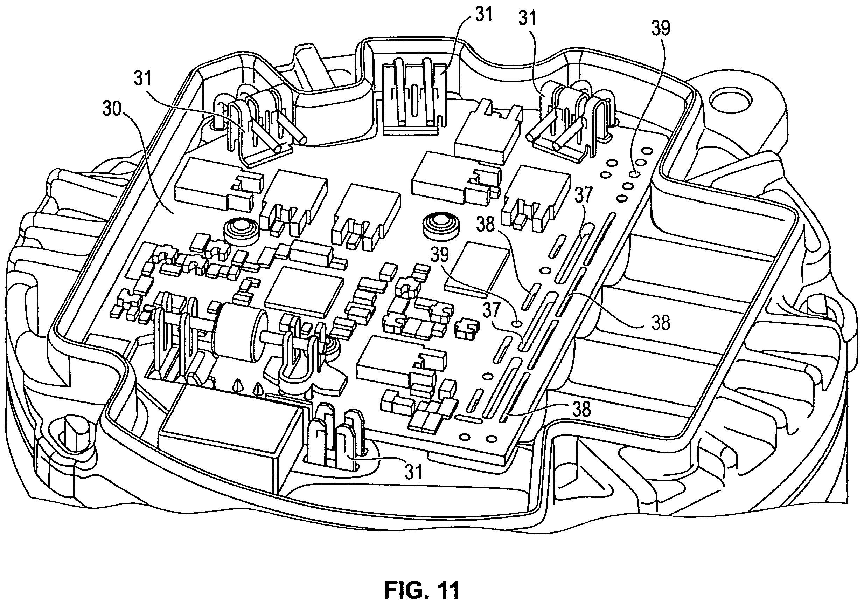

Wie aus Fig. 11 vergleichsweise deutlich ersichtlich ist, befinden sich zwischen den beiden zueinander beabstandet und parallel verlaufenden Stromschienen 36a und 36b des Stromschienenpaars 36 in Schienenlängsrichtung verlaufende schlitzartige Ausnehmungen 37 in der Leiterplatte 30. Diese dienen zur Kriechstromunterdrückung und zur Kristallisationsvermeidung. Die Montage und Halterung der Stromschienen 36a, 36b auf der Leiterplatte 30 erfolgt in darin eingebrachte Steckschlitze 38 und Stecköffnungen oder -löcher 39.

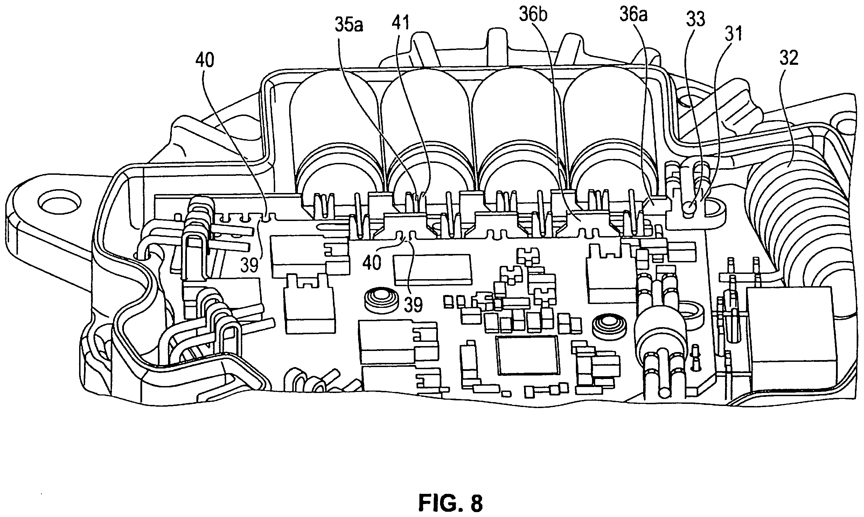

Wie aus den Fig. 8 bis 10 vergleichsweise deutlich ersichtlich ist, korrespondieren mit den Stecklöchern 39 an die Stromschienen 36a und 36b angeformte Einpressstifte 40. Diese sind keil- oder pfeilspitzenförmig ausgestaltet und ermöglichen somit einen zuverlässigen, insbesondere kraftschlüssigen Sitz des Stromschienenpaares 36 in der Leiterplatte 30. Die Kontaktierung der Kondensatoren 34 mit den Stromschienen 36a, 36b erfolgt mittels Klemmkontakten 41, in denen die Anschlusskontakte 35a und 35b der Kondensatoren 34 klemmkontaktiert werden.

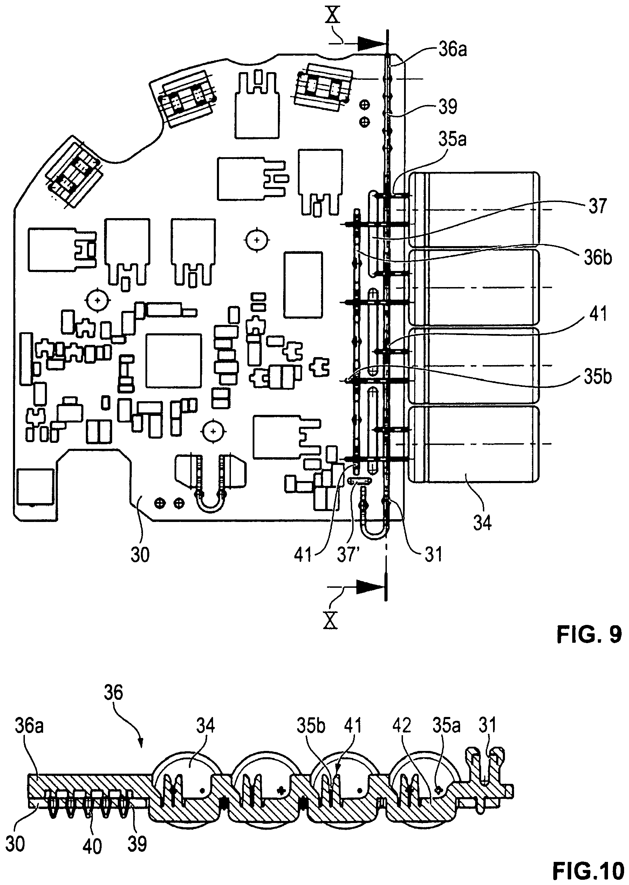

Wie aus Fig. 10 vergleichsweise deutlich ersichtlich ist, ist in die den Kondensatoren 34 zugewandte und somit diesen nächstgelegene Stromschiene 36a eine Anzahl von Ausnehmungen 42 eingebracht. Über diesen ist der mit der gegenüberliegenden Stromschiene 36b zu kontaktierende Anschlusskontakt 35a des jeweiligen Kondensators 34 berührungslos und somit kontaktfrei geführt. Die Ausgestaltung des Stromschienenpaares 36 ermöglicht eine besonders zuverlässige und insbesondere raumsparende Anordnung der von den Stromschienen 36a und 36b gebildeten Kontaktelemente 31, 41 für die Entstördrossel bzw. für die Ladekondensatoren 34.

Wie aus den Fig. 7 und 9 vergleichsweise deutlich ersichtlich ist, ist in dem Bereich zwischen dem kurzen U-Schenkel der Stromschiene 36a und dem Schienenende der hierzu parallelen Stromschiene 36b eine weitere Ausnehmung 37' in die Leiterplatte 30 eingebracht, um auch an dieser Stelle einen Kriechstrom bzw. temperaturbedingte Kristallisationen zu vermeiden. Dieser Schlitz bzw. diese Ausnehmung 37' verläuft quer zu den sich zwischen den Stromschienen 36a, 36b befindenden Ausnehmungen 37.

Die Fig. 12 und 13 zeigen schematisch die Geometrie der Schneidklemmkontakte 31 für lackisolierte Anschlüsse (Anschlusskontakte) und Massivdrähte, wie diese vorliegend bei den Wicklungsenden 26 der Drehfeldwicklung 7 und den Spulenenden 33 der Entstördrossel 32 vorhanden sind. Derartige Massivdrähte bestehen üblicherweise aus einer Kupferseele oder Kupferleitung 43, die mit einer Lackisolierung 44 ummantelt ist.

Der Schneidklemmkontakt 31 weist zwischen dessen Schneidklemmschenkeln 31a und 31 einen Schneidklemmspalt 31c auf. Dieser erstreckt sich in Schneidklemmrichtung 45 ausgehend von einer Einsteckzone (Einsteckmündung) E bis zum Kontakt- oder Klemmboden 31d. Entlang des Schneidklemmspalts 31c sind in Schneidklemmrichtung 45 die den Schneidklemmspalt 31c beidseitig flankierenden Schneidklemmkanten 46 derart gestaltet, dass sich unterschiedliche Zonen mit unterschiedlichen Funktionen ergeben.

So schließt sich an die Einsteckzone E eine Vorschneidezone V an. Innerhalb der Vorschneidezone V ist die Schneidklemmkante 46 beider Schneidklemmschenkel 31a, 31 scharfkantig mit einer entsprechenden Schneidkante 46a ausgebildet. Innerhalb der Vorschneidezone V erfolgt ein zuverlässiges Einschneiden der Lackisolation 44 des jeweiligen Kontaktes 26, 33.

An die Vorschneidezone V schließt sich eine Abreibzone A an. Innerhalb dieser Abreibzone verläuft die Schneidklemmkante 46 schräg. Innerhalb dieser Abreibzone A verjüngt sich der Schneidklemmspalt 31c in Schneidklemmrichtung 45 zum Klemmboden 31d hin zunehmend zwischen den entsprechenden Abreibkanten 46b der einander gegenüberliegenden Schneidklemmkanten 46 der beiden Schenkel 31a und 31 des Schneidklemmkontaktes 31. Innerhalb der Abreibzone A erfolgt während des Entlanggleitens des Kontaktes 26, 33 an der schrägen Abreibkante 46b ein langsames Abreiben der Lackisolation 44, ohne dass Isolationsreste in der Kontaktstelle verbleiben.

An die Abreibzone A schließt sich in Schneidklemmrichtung 45 eine Klemmzone K an. Insbesondere am Eintritt aus der Abriebzone A in die Klemmzone K ist an der Schneidklemmkante 46 eine Rundkante 46c ausgebildet. Duíese bzw. deren Radius bewirkt einen langsamen Kraftanstieg beim Einpressen des Kontaktes 26, 33 in die Klemmzone K des Schneidklemmspaltes 31c. Hierdurch sind die maximalen Einpresskräfte reduziert. Dies wiederum führt zu einer entsprechenden Reduzierung der auf eine Verbindungsstelle 47 zwischen dem Schneidklemmkontakt 31 und der Leiterplatte 30 während des Klemmvorgangs wirkenden Kraft. Hierdurch wird die als Lötstelle ausgeführte Verbindung 47 entsprechend gering mechanisch belastet.

Der Elektromotor 5, insbesondere Kühlerlüftermotor für ein Kraftfahrzeug, umfasst einen (bewickelten) Stator 6 und einen diesem gegenüber drehbar gelagerten Rotor 8 sowie eine Umrichterelektronik 15 mit einer Leiterplatte 30 und ein Stromschienenpaar 36 mit Klemmkontakten 41 zur Klemmkontaktierung einer Anzahl von Lade- oder Speicherkondensatoren 34. Der Elektromotor 5 umfasst somit den die Drehfeldwicklung 7 tragenden Stator 6 und den diesem gegenüber drehbar gelagerten, vorzugsweise permanenterregten, Rotor 8 sowie die Umrichterelektronik 15 mit Schneidklemmkontakten 31 zur Kontaktierung der Wicklungsenden 26a, 26b der Drehfeldwicklung 7. Die Umrichterelektronik 15 weist die Leiterplatte 30 auf, auf der die Schneidklemmkontakte 31, vorzugsweise mittels Lötverbindungen 47, montiert sind.

Die Leiterplatte 30 ist mit schlitz- und/oder lochartigen Stecköffnungen 38, 39 zur Aufnahme korrespondierender Steckstellen bzw. Steckstifte 40 des Stromschienenpaares 36 versehen. Die in die Leiterplatte 30 eingebrachten Ausnehmungen 37, die sich zwischen den Stromschienen 36a und 36b des Stromschienenpaares 36 befinden, dienen zur Vermeidung von Kriechströmen und/oder temperaturbedingten Kristallisationserscheinungen. Die Ausnehmungen 42 in einer der Stromschienen 36a dienen zur Durchführung von mit der anderen Stromschiene 36b klemmkontaktierten Anschlüssen oder Anschlusskontakten 35b der Kondensatoren 34.

## Patentansprüche

1. Elektromotor (5) mit einem eine Drehfeldwicklung (7) tragenden Stator (6) und mit einem gegenüber dem Stator (6) drehbar gelagerten, permanenterregten Rotor (8) sowie mit einer Umrichterelektronik (15) mit einer Leiterplatte (30), auf der eine Anzahl von als Klemm- oder Schneidklemmkontakte ausgebildete Kontaktelementen (31, 41) für isolationsfreie oder lackisolierte Anschlusskontakte (33, 35) mindestens eines Bauelementes (32, 34) der Umrichterelektronik (15) und/oder für lackisolierte Wicklungsenden (26) der Drehfeldwicklung (7) montiert sind,
- wobei ein Stromschienenpaar (36) mit einer Anzahl von Klemmkontakten (41) vorgesehen ist, die der Anzahl von isolationsfreien Anschlusskontakten (35) mindestens eines Ladekondensators (34) entsprechen, und
- wobei die Leiterplatte (30) eine Anzahl von Steckschlitzen (38) und/oder Stecklöchern (39) aufweist, in denen das Stromschienenpaar (36) mit korrespondierenden Steckstellen (40) einsitzt,
**dadurch gekennzeichnet,**
- **dass** zwischen den Steckschlitzen (38) bzw. Stecklöchern (39), die den beiden Stromschienen (36a, 36b) des Stromschienenpaares (36) zugeordnet sind, in die Leiterplatte (30) eine Anzahl von Ausnehmungen (37) eingebracht sind, die zu den Stromschienen (36a, 36b) parallel verlaufen, und
- **dass** in eine der beiden Stromschienen (36a) des Stromschienenpaares (36) eine der Anzahl der Speicherkondensatoren (34) entsprechende Anzahl von Ausnehmungen (42) eingebracht sind, über welche der jeweilige, mit der anderen Stromschiene (36b) klemmkontaktierte Anschlusskontakt (35b) der Ladekondensatoren (34) derart durch die Ausnehmung (42) geführt ist, dass er die eine der beiden Stromschienen (36) nicht berührt.

2. Elektromotor (5) nach Anspruch 1,
**gekennzeichnet durch**
eine Entstördrossel (32) mit lackisolierten Anschlusskontakten (33), die in Schneidklemmkontakten (31) klemmkontaktiert sind.

3. Elektromotor (5) nach Anspruch 1 oder 2,
**dadurch gekennzeichnet,**
**dass** der jeweilige Schneidklemmkontakt (31) zwischen zwei Schneidklemmschenkel (31a, 31b) einen sich in Schneidklemmrichtung (45) von einer Einsteckzone (E) zu einem Kontaktboden (31d) hin erstreckenden Schneidklemmspalt (31c) mit einer sich an die Einsteckzone (E) anschließenden Vorschneidezone (V) mit einer Schneidkante (46a) aufweist.

4. Elektromotor (5) nach Anspruch 3,
**dadurch gekennzeichnet,**
**dass** sich an die Vorschneidezone (V) des Schneidklemmspalt (31c) in Schneidklemmrichtung (45) eine schräg verlaufende Abreibzone (A) mit einer Abreibkante (46b) für die Lackisolation (44) des Anschlusskontaktes (26, 33) anschließt.

5. Elektromotor (5) nach Anspruch 3 oder 4,
**dadurch gekennzeichnet,**
**dass** der Schneidklemmspalt (31c) zur Bewirkung eines in Schneidklemmrichtung (45) langsam zunehmenden Klemmkraftanstiegs eine sich an die Abreibzone (A) anschließende Klemmzone (K) mit einer Rundkante (46c) aufweist.

## Claims

1. Electric motor (5) comprising a stator (6), which is fitted with a rotating-field winding (7), and comprising a permanent-magnet rotor (8), which is mounted such that it can rotate in relation to the stator (6), and also comprising a converter electronics system (15) with a printed circuit board (30) on which a number of contact elements (31, 41), which are designed as clamping contacts or insulation-displacement contacts, for insulation-free or enamel-insulated connection contacts (33, 35) of at least one component (32, 34) of the converter electronics system (15) and/or for enamel-insulated winding ends (26) of the rotating-field winding (7) are mounted,
- wherein a pair (36) of busbars with a number of clamping contacts (41) is provided, which number of clamping contacts corresponds to the number of insulation-free connection contacts (35) of at least one charging capacitor (34), and
- wherein the printed circuit board (30) has a number of insertion slots (38) and/or insertion holes (39) in which the pair (36) of busbars is seated by way of corresponding insertion points (40),
**characterized**
- **in that** a number of recesses (37) which run parallel in relation to the busbars (36a, 36b) are made in the printed circuit board (30) between the insertion slots (38) or insertion holes (39) which are associated with the two busbars (36a, 36b) of the pair (36) of busbars, and
- **in that** a number of recesses (42), which corresponds to the number of storage capacitors (34), are made in one of the two busbars (36a) of the pair (36) of busbars, the respective connection contact (35b) of the charging capacitors (34), with which connection contact clamping contact is made by the other busbar (36b), being guided by means of the said recesses through the recess (42) in such a way that the said connection contact does not touch the said one of the two busbars.

2. Electric motor (5) according to Claim 1, **characterized by** an interference-suppression inductor (32) with enamel-insulated connection contacts (33) with which clamping contact is made in insulation-displacement contacts (31).

3. Electric motor (5) according to Claim 1 or 2, **characterized in that** the respective insulation-displacement contact (31) has, between two insulation-displacement limbs (31a, 31b), an insulation-displacement gap (31c) which extends in an insulation-displacement direction (45) from an insertion zone (E) to a contact base (31d) and which has a pre-cutting zone (V) which adjoins the insertion zone (E) and has a cutting edge (46a).

4. Electric motor (5) according to Claim 3, **characterized in that** an obliquely running abrasion zone (A) having an abrasion edge (46b) for the enamel-insulation (44) of the connection contact (26, 33) adjoins the pre-cutting zone (V) of the insulation-displacement gap (31c) in the insulation-displacement direction (45).

5. Electric motor (5) according to Claim 3 or 4, **characterized in that** the insulation-displacement gap (31c) has a clamping zone (K), which adjoins the abrasion zone (A) and has a rounded edge (46c), for slowly increasing the clamping force in the insulation-displacement direction (45).

## Revendications

1. Moteur électrique (5) comprenant un stator (6) supportant un enroulement à champ tournant (7) et un rotor à aimant permanent (8) monté à rotation par rapport au stator (6), ainsi qu'une électronique de convertisseur (15) comprenant une carte de circuit imprimé (30) sur laquelle sont montés un certain nombre d'éléments de contact (31, 41) conçus comme contacts à serrage ou à borne guillotine et destinés à des contacts de connexion (33, 35) sans isolation ou isolés par vernis d'au moins un composant (32, 34) de l'électronique de convertisseur (15) et / ou destinés à des extrémités d'enroulement (26) isolées par vernis de l'enroulement à champ tournant (7),
- une paire de barres conductrices (36) étant pourvue d'un certain nombre de contacts à serrage (41) qui correspond au nombre de contacts de borne (35) sans isolation d'au moins un condensateur de charge (34), et
- la carte de circuit imprimé (30) comportant un certain nombre de fentes d'enfichage (38) et/ou de trous d'enfichage (39) dans lesquels la paire de barres conductrices (36) est insérée avec des points d'enfichage correspondants (40),
**caractérisé en ce que**
- entre les fentes d'enfichage (38) ou les trous d'enfichage (39), qui sont associés aux deux barres conductrices (36a, 36b) de la paire de barres conductrices (36), un certain nombre d'évidements (37) sont ménagés dans la carte de circuit imprimé (30), lesquels s'étendent parallèlement aux barres conductrices (36a, 36b) et
- dans l'une des deux barres conductrices (36a) de la paire de barres conductrices (36) est ménagé un certain nombre d'évidements (42) qui correspond au nombre de condensateurs de stockage (34), le contact de connexion respectif (35b), en contact serré avec l'autre barre conductrice (36b), des condensateurs de charge (34) étant guidé au moyen desdits évidements à travers l'évidement (42) sans toucher l'une des deux barres conductrices (36).

2. Moteur électrique (5) selon la revendication 1,
**caractérisé par**
une bobine de choc antiparasite (32) pourvue de contacts de connexion (33) isolés par vernis qui sont en contact serré dans des contacts à borne guillotine (31) .

3. Moteur électrique (5) selon la revendication 1 ou 2,
**caractérisé en ce que**
le contact à borne guillotine respectif (31) comporte entre deux branches à borne guillotine (31a, 31b) une fente de borne guillotine (31c) qui s'étend dans la direction de borne guillotine (45) depuis une zone d'enfichage (E) à un fond de contact (31d) et qui comporte une zone de prédécoupe (V) pourvue d'un bord de coupe (46a) et se raccordant à la zone d'enfichage (E) .

4. Moteur électrique (5) selon la revendication 3,
**caractérisé en ce que**
une zone d'abrasion oblique (A) pourvue d'un bord d'abrasion (46b) destiné à l'isolation par vernis (44) du contact de connexion (26, 33) se raccorde à une zone de prédécoupe (V) de la fente de borne guillotine (31c) dans la direction de borne guillotine (45).

5. Moteur électrique (5) selon la revendication 3 ou 4,
**caractérisé en ce que**
la fente de borne guillotine (31c) comporte une zone de serrage (K), pourvue d'un bord circulaire (46c) et se raccordant à la zone d'abrasion (A), pour augmenter la force de serrage qui augmente lentement dans la direction de borne guillotine (45).
